# EUROPEAN PATENT SPECIFICATION

(11) **EP 2 880 365 B1**
(45) Date of publication and mention of the grant of the patent: **21.11.2018**
(21) Application number: 13765482.8
(22) Date of filing: 11.07.2013
(51) Int. Cl.: F23J 15/06, F23J 15/04, B01D 47/12

(54) **ENERGY RECOVERY SYSTEM**
ENERGIERÜCKGEWINNUNGSSYSTEM
SYSTÈME DE RÉCUPÉRATION D'ÉNERGIE

(30) Priority: 02.08.2012 IT TV20120153
(43) Date of publication of application: 10.06.2015
(73) Proprietor: GOOD SKY SRL, 70123 Bari (IT)
(72) Inventor: EBERLE, Giorgio, 31053 Pieve Di Soligo (TV) (IT)
(74) Representative: Citron, Massimiliano
(86) International application number: PCT/IB2013/055696
(87) International publication number: WO 2014/020466

(56) References cited:
- EP-A1- 1 132 125
- EP-A1- 2 221 539
- WO-A1-94/17898
- US-A- 4 369 167
- US-A- 4 909 161
- US-A- 4 976 210
- US-A- 5 198 201
- US-A1- 2005 229 871
- US-A1- 2009 148 371
- US-A1- 2011 033 359
- US-A1- 2011 126 715
- US-B1- 6 273 940
- US-B1- 6 551 382

## Description

The invention relates to a system for recovery of energy and impurities from fumes or gases or vapor or volatile fluids, in particular to recover powders or polluting emissions into the atmosphere and/or at temperatures considered pollutants.

We refer as an example to a flue for expelling fumes, meaning below for "fumes" any solid or gaseous compound capable of being cleaned and/or cooled to recover heat therefrom.

The fumes emitted by industrial or residential boilers are known to contain powders, pollutants and heat that is recoverable energy. See U.S. 2010/0212607 which addresses just this field and the related problems.

Given the environmental importance and the magnitude of obtainable savings, then a device is needed that allows to reduce the emission of powders and pollutants, and/or to lower the temperature of exhaust fumes from the flues, and/or simultaneously recover part of the thermal energy owned by the fumes, and/or to improve the energy balance of heating industrial/civil plants by lowering their operating costs. Important characteristics are also the excellent effectiveness, the structural simplicity, and in particular low production costs, high efficiency of energy recovery, and scalability to adapt to different applications and/or to give different performances.

A system that has some of these features facilitates not only the improvement of environmental conditions but also huge energy savings. However, little are now the solutions with high efficiency and/or low operating costs.

WO 94/17898 discloses a to an off-gas scrubber system having at least two scrubbers 20, 80 connected in series, according to the preamble of independent claim 1.

It is proposed here instead a system for recovering energy from fumes or gases, such as in the appended claims wherein the dependent ones define advantageous variants, which guarantee results.

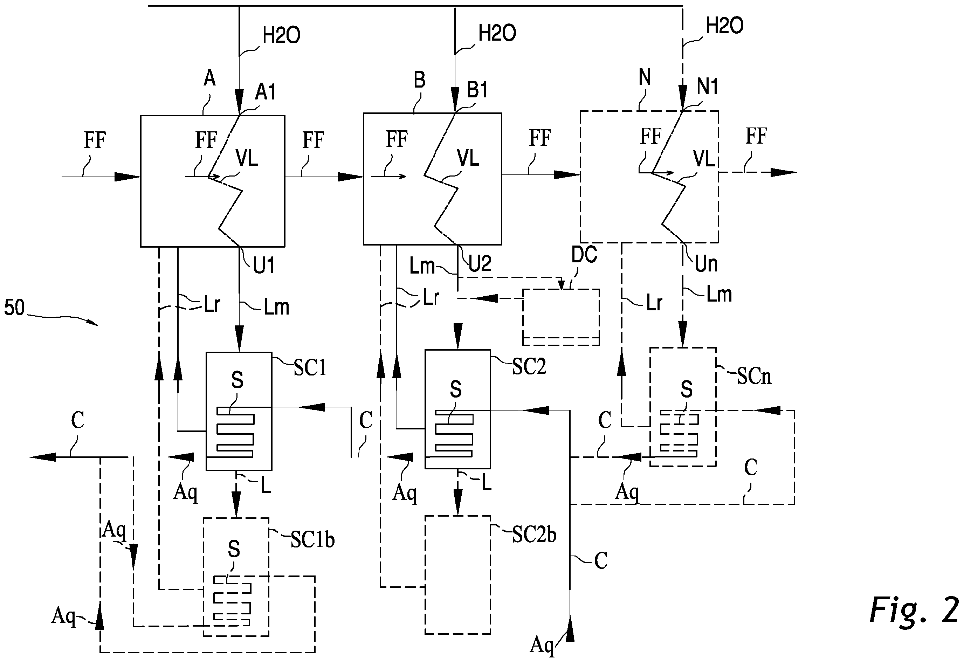

In fig. 2 a simplified diagram is shown of the general architecture and the concept of the system, indicated with 50.

In the following figures, same numbers indicate equal parts, while H20 or arrowed lines indicate an oriented path of water or fumes or generally fluid.

The system 50 comprises at least two stages A, B arranged in tandem fashion, in which the fumes FF to be cleaned up and/or to be cooled enter first in stage A and then, from this, enter in stage B, from which then they come out. There can be a number N of stages, N >= 2, and each one can have the features described herewith for stage A or B.

The terms "upstream" or "downstream" referred to stages A, B, ... or N-th are to be considered relative to the path of the fumes FF.

In the stages A, B, ... N water (or typically a fluid or liquid) H2O is fed, e.g. coming from the aqueduct or from a well, etc., then e.g. it is sprayed and/or nebulized and/or made to flow inside the stages A, B, ... N to create miscellaneous, waterfalls or veils of flowing water VL.

There are water inlets A1, B1, ... N1 in the respective stages A, B, ... N that can be adjustable, preferably so that the total flow-rate Pt remains approximately constant and so that it is divided into the flow-rates PA, PB, ... Pn of inlets A1, B1, ... N1. So if the flow-rate PA grows, the flow rate PB decreases, i.e. PA + PB + ... + Pn = K, constant. The water comes out from the stages A, B, ... N, respectively through outputs U1, U2, ... Un.

Note that for each stage A, B, ... N in general there can be for the water one or more inlets A1, B1, ... N1 and/or one or more outlets U1, U2, ... Un, based on the number and geometry of the waterfalls or veils VL inside each stage. In this case, for the previous formula the flow-rates PA, PB, ... Pn indicate the total flow-rate of water entering a stage.

The constant K is set to subtract from the fumes FF the maximum amount of heat, while the values of PA, PB, ... Pn are established to determine the temperature or the flow-rate(s) of water from the outlets of the stages A, B, ... N.

Note that the structure having two (or more) stages A, B advantageously allows to extract a lot of heat from the fumes FF. In fact, they can arrive at the first stage A with high temperature, resulting in high-temperature water mixed with the fumes coming out from the outlet U1, which can at most have a temperature of 85-90 °C, otherwise it would be steam. The fumes FF entering the stage B downstream therefore can not have a temperature lower than that of water leaving the outlet U1, and therefore they still contain a lot of removable heat. The task of the following stage (or stages) B is just to remove the residual energy content of the fumes FF, bringing them out into the environment at low or lower temperature than room temperature, e.g. at 30 °C.

Preferably the water inside the stages A, B, ... N forms waterfalls or veils VL transverse to the direction of the path of the fumes FF, therefore the fumes FF are forced to pass through them releasing a lot heat and impurities. Preferably the veils or waterfalls VL are formed by making the water fall from baffles or walls, at different heights, which define a path for the fumes FF inside of the stages A, B, ... N.

From the outlets U1, U2, ... Un the water through conduits Lm reaches a respective heat exchanger SC1, SC2, ... Scn associated respectively to each stage A, B, ... N. From such exchangers the water recirculates back through conduits Lr to the starting stage or to the stage emitting into the flue. Each stage A, B, ... N can have any number of exchangers arranged in tandem fashion, some indicated in dashed lines with SC1b, SC2b, ... SCNB. Each time the water, through the conduit Lm, will pass through in sequence and in series all the exchangers associated with a stage, and will return to the stage of departure via the conduit Lr.

A conduit C has such a path as to touch or go inside each exchanger in the system 50. The conduit C carries a fluid Aq, e.g. water, air, a gas or a refrigerant, which heats up upon subtracting heat inside the exchangers SC1(b), SC2(b), ... SCn(b) from the incoming fluid from the stages A, B, ... N.

Advantageously the fluid Aq is flowed, and the duct C has a path, so that the fluid Aq meets first the exchangers of the stage further downstream (stage B and the following ones downstream in fig. 2), and then in series all the other ones by going upstream (stage A). This ensures that the fluid Aq passes first through the coldest exchangers to go towards the warmer ones. In fact, the upstream stage A is the one with the hottest fumes FF and from which one can extract more heat, creating a fluid at the outlet U1 much hotter than that at the output U2, ... Un further downstream. The sequential passage of the fluid Aq inside the exchangers SC1, SC2, ... SCn and/or SC1b, SC2b,... SCnb, each time containing warmer fluid, implements and exploits the principle of counter-current heat exchange, with many associated advantages such as:
- eliminating large temperature variations between the fluid Aq and the incoming fluid from the stages A, B, ... N, and, therefore, the loss is prevented of some possible work by making some heat flow between a fluid at very high temperature toward one at very low temperature;
- in countercurrent, the heat exchanged with respect to the co-current case being equal, the dimensions of the system are smaller. The cost of the system is proportional to the weight and size, so the cost and the environmental impact improves. For plants of considerable energy potential, such as in district far-heating, the miniaturization is essential to keep costs down, and allows to have small and well distributed central units;
- the thermal exchange is slower than a co-current system, so time is given to fluid Aq to pass from an exchanger to the other dispersing overall less energy. In large plants, efficiency is thus improved.

The heat exchange inside the heat exchangers can be achieved e.g. through coils or plates S or other known systems.

In the circulation or closed circuit of fluid between any of stages A, B, ... N and the relative exchanger(s) SC1, SC2, ... SCn and/or SC1b, SC2b, ... SCnb one or more settling tanks DC can be interposed. The incoming fluid from a stage A, B, ... N can pass through it/them to sediment therein the particles or dust in suspension, which are more easily gathered and disposed. In fig. 2 as an example only one tank DC for stage B is shown, in hatched lines.

In some variants the conduits Lr for the return of cooled and/or purified fluid can flow also or only into one or more stages different from the starting one. This is useful e.g. when it is needed to inject in a stage warmer fluid or fluid colder than the available one H2O, or to limit the complexity of supply of fluid H2O.

The conduit C can pass through, or be thermally coupled with, the tanks DC as well, with the advantage of recovering more heat, at the price of a minimum structural complication.

Preferably the conduit C is tapped from a source of fluid, such as e.g. the aqueduct, a well or a cistern, and on delivery side is connected to a boiler or district far-heating system.

In some variants energy can be recovered from the tanks DC and/or from exchangers SC1, SC2, ... SCn without using a conduit C or, in general, a fluid able to remove calories. E.g. when a very hot liquid is collected, it can be heated with high efficiency to make it evaporate and then power a turbine.

Greater efficiency is achieved by creating a closed circuit of liquid between each stage A, B, ... N and its respective associated elements (heat exchangers and/or settling tanks). It is possible, however, a different architecture without recirculation, although constant integration of liquid is needed.

It is also proposed a method for recovering energy from fumes or gases, as in claim 10 and following.

The appended method claims may include any technical feature of the system of claims 1 to 9, in the form of method phases.

In general any suitable liquid can be used to subtract heat and/or impurities from the fumes or gases or vapors, preferably water.

The advantages of the system and the method will still be more apparent from the following description of a preferred embodiment, making reference to the attached drawing in which
- Fig. 1 illustrates, in a schematic view, a plant;
- Fig. 2 illustrates, in a schematic view, the general architecture of a plant.

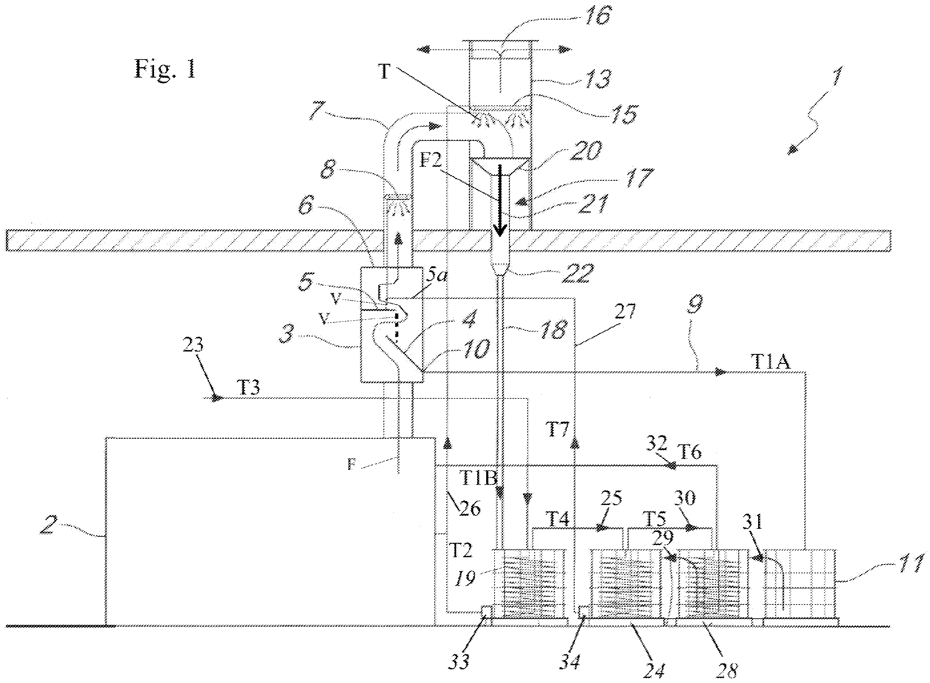

Figure 1 shows a plant 1 for energy recovery that recovers thermal energy generated by a heating device, such as a boiler 2. Into plant 1 are discharged the fumes F coming out from the boiler F into a device 3 having an inner labyrinthine conduit. The device 3 is composed of a box-shaped element or hollow outer casing, which is open at a top end 6. Inside the device 3 there is a first baffle 4, a second baffle 5 and a third baffle 5a, or N baffles, protruding from the walls of the casing and mutually opposed to each other.

The baffles 4, 5, 5a force the fumes F to follow a labyrinthine and therefore not straight path.

The baffle 4 is located in a position inclined to the vertical with the free end facing upwards, while the baffles 5 and 5a are arranged substantially parallel to the top end 6 of the labyrinthine duct 3.

At top end 6 inserts a flue 7, inside which there is positioned a sprinkler 8 of water which while falling intercepts, in countercurrent, the flow of fumes F coming out from the duct 3. The water coming from sprinkler 8 provides an initial washing of the fumes F.

The path of the water, which has downward motion due to gravity, is oriented through the baffles 4, 5 toward a first discharge duct 9 which flows into lower end 10 of the baffle 4. The water, which is heated by washing the fumes, runs along the discharge duct 9 and is discharged, for example at a temperature T1A, e.g. of about 90 °C, into a settling tank 11.

In particular, the baffles 4, 5, 5a (or in general some of the baffles inside the device) are arranged so that the water of sprayer 8 falls onto them and, by passing from one to another, forms a vertical veil or waterfall V. Such veil or waterfall V interposes to or crosses the path of the fumes F between baffles 4, 5, 5a. In this way the fumes F are forced to go through the veil or waterfall V releasing to it both heat and powder or particles, then evacuated together with the water.

A chimney 7 placed above the device 3 has a substantially inverted "U" shape, the free end of which is placed inside a flue 13 and is facing downwards. The flue 13 has a support and containment frame for the free end and for supporting a second sprinkler 15, located inside the flue 13 in a position above the free end.

The fumes F2 that come out from the free end tend to climb towards a top outlet 16 of the flue 13, and are sprayed, in countercurrent, from the second sprinkler 15 which provides for a second wash thereof.

In particular, the sprinkler 15 is adapted to form a horizontal water ceiling or layer T, so that the fumes F2 compulsorily must pass through it, with the same effect generated by, and at, a veil V.

The water emitted from a sprinkler 15 falls, by gravity, in a conveyor 17 positioned at the base of the flue 13, below the free end 12, to transport the water, through a second discharge duct 18, to a second tank 19.

The conveyor 17 has a feed hopper 20 which conveys the water coming from sprinkler 15, after being heated by the fumes F2, in a straight pipe 21 to the lower end of which is located a convergent 22 which conveys the water in the discharge duct 18.

In this case, too, before the exchanger tank 19 there can be N settling tanks.

The second tank 19 has an inner coil in which water is introduced, through a third conduit 23, which is drawn from a source or from an aqueduct at temperature T3, for example at 13 °C. The same coil transfers water that has been heated (by the water contained in the tank at a temperature of e.g. 31 °C) at a temperature T4, for example at 30 °C, to a third tank 24 through a fourth conduit 25.

Said third tank 24, box-shaped, is also functioning as a heat exchanger.

The water coming from the second discharge duct 18 is made to flow inside the second tank 19 and is brought to a temperature T2, for example at 17 °C, and sent to said second sprinkler 15 via a fifth conduit 26 through a suitable first pump 33, placed at the base of the second tank 19. Even the third tank 24 has internally a coil in which the water transported by the fourth conduit 25 is entered, coming from the second tank 19, at a temperature T4, for example at 25 °C.

The same coil transfers water, which was heated to temperature T5, for example 50 °C, to a fourth tank 28 through an eighth duct 30.

The box-shaped fourth tank 28 also works as a heat exchanger. From the fourth tank 28 the water is siphoned to the third tank 24 through a seventh duct 29 and is then cooled to a temperature T7, for example 35 °C, and sent to the first sprinkler 8 via a sixth conduit 27 through a suitable second pump 34, placed at the base of the third tank 24.

The fourth tank 28 is provided internally with a coil in which water coming from the eighth duct 30 is introduced. The same coil sends water, cooled to temperature T6, for example 90 °C, in said boiler 2 through a tenth duct 32. From the first tank 11 water is decanted to the fourth tank 28 through a ninth duct 31 and is then decanted from said fourth tank 28 to the third tank 24 through a seventh duct 29, and so on for N tanks.

The amount of water used for spraying the fumes and the pressure of the fumes themselves is balanced not to cause any problem of pressure or depression to the combustion. More precisely, the water in this way can lower the temperature of the fumes, harmful to the environment, that without the instant plant would come out into the atmosphere.

The system by means of the fume washing allows to eliminate from the same most of the powders and contaminants and at the same time allows a strong reduction of the output temperature of the fumes themselves increasing the temperature of the washing water that can be conveyed to the first tank 11 and the second tank 19 so as to recover the heat in order to greatly improve the total energy balance given that, at full capacity, it significantly raises the temperature of the water to be sent to the boiler, thus lowering the costs.

The water in this way can lower the temperature of exhaust fumes from the flues, harmful to the environment, that without the present system would exit at about 70-90 °C, if it escapes from condensing boilers, and about 170-400 °C, if escaping from non-condensing boilers or furnaces or kilns.

Furthermore, the water is able to capture a large portion of the particles of suspended micro-powders, which are thus guided and channeled with the treated water in the exhaust up to the settling tank and then to the heat-exchange tanks.

In general, from the diagram of fig. 1 or 2 it is understood that the system is able to evacuate most of the fumes together with the water, greatly reducing the emission of fumes into the atmosphere. In the described systems the powders in the fumes are captured by nebulized or running water, and can be separated from the water by decanting in settling tanks and then stored in tanks. The hot but cleaned up water can re-enter e.g. heating plants, processing cycles or can be sent to district far-heating residential systems.

## Claims

1. Device (1; 50) for energy recovery from fumes or gases (F, FF, F2), comprising:
at least two stages (A, B, 3, 15, 20) arranged in tandem fashion wherein the downstream stage receives the fumes or gases output by the upstream one,
each stage comprising an inlet (A1, B1; 27, 26) and an outlet (U1, U2; 9, 18) for a liquid to be collided with fumes or gases in transit inside the stage for subtracting from them heat and/or impurities;
at least one heat exchanger (SC1, SC2, SCN, 19, 24, 29) associated with each stage and adapted to receive at an inlet a quantity of the liquid coming out from the stage to subtract heat from it
**characterized by** comprising a conduit (C) coupled to each heat exchanger so that a fluid (Aq) can flow in it and, at each exchanger, subtract heat from the liquid circulating therein;
the conduit (C) being arranged so that the fluid (Aq) crosses first some or all of the heat exchanger associated with the stage which is, with respect to the flow of fumes or gases, further downstream, then those associated to the stage directly upstream, and so on.

2. Device according to claim 1, comprising at least one settling tank (DC; 11) associated to a stage (B, 5) and inserted so as to receive the liquid output from the stage and retain in the tank the suspended particles present in the liquid coming out from the stage.

3. Device according to claim 1 or 2, wherein the conduit passes through all the settling tanks of the present stages.

4. Device according to claim 1 or 2 or 3, comprising a fluid circuit for re-circulating a quantity of fluid to the starting stage.

5. Device according to any one of the preceding claims, wherein the flow rate of the liquid in the stages is adjustable, so that the sum of the overall flow-rates of the stages remains equal to a constant (K) that can be set.

6. Device according to any one of the preceding claims, comprising for the liquid paths internal to a stage to be configured such as to form veils or curtains or cascades of liquid (V, VL) transversely to the feed direction of the fumes or gases inside the stage, so that the fumes or gases are forced to pass through them.

7. Device according to claim 6, wherein a stage comprises a hollow outer casing (52, 76, 138, 142) having an inlet and an outlet (134, 135, 146) for the fumes or gases, a plurality of baffles (112) with their surfaces arranged to define a path for fumes or gases inside the housing, a sprayer of liquid (118, 62) disposed inside the housing for spraying a liquid and washing the fumes or gases, thereby extracting heat and impurities therefrom, wherein the plurality of baffles and the sprayer are positioned so that the liquid goes from a baffle to another baffle forming in the intermediate space a cascade or curtain or veil of liquid transverse to the path of the fumes or gases.

8. Device according to claim 7, wherein the sprayer is adapted to spray water directly against a baffle so as to form on it a film of flowing liquid.

9. Device according to claim 8, wherein the baffles are arranged to determine a tortuous path of the fumes or gases, with subsequent changes of direction of at least 90 degrees.

10. Method for recovering energy from fumes or gases, (F, FF; F2), comprising:
making the fumes or gas flow inside at least two stages (A, B, 3, 15, 20) arranged in tandem fashion so that the stage downstream receives the fumes or gases output by the upstream one;
injecting in each stage a liquid to be collided with the fumes or gases in transit in each stage in order to subtract from them heat and/or impurities and circulating the liquid towards at least one heat exchanger (SC1, SC2, SCn) associated to each stage to absorb heat from the liquid.
**characterized in that**
a fluid (Aq) is circulated so that it passes in tandem fashion each exchanger and subtracts heat from the liquid arriving from a stage,
wherein the fluid (Aq) circulates so as to meet first the exchanger associated with the stage downstream relative to the feed direction of fumes or gases, and in sequence then the exchangers of the stages upstream.

11. Method according to claim 10, wherein the liquid is made to settle in a tank while circulating from/to a stage.

12. Method according to claim 11, wherein the liquid circulates so as to meet a said tank and to subtract heat from the liquid present therein.

## Patentansprüche

1. Vorrichtung (1; 50) zur Energierückgewinnung aus Rauchgas oder Gas (F; FF; F2), umfassend
zumindest zwei Stufen (A, B; 3, 15, 20) als Kaskade, wobei die Stufe stromabwärts das aus der Stufe stromaufwärts ausgehende Rauchgas oder Gas aufnimmt,
wobei jede Stufe einen Eingang (A1, B1; 27, 26) und einen Ausgang (U1, U2; 9, 18) für eine Flüssigkeit (H20) umfasst, die auf das in der Stufe durchgehende Rauchgas oder Gas stoßen muss, um Wärme und/oder Verunreinigungen davon auszunehmen;
zumindest einen Wärmetauscher (SC1, SC2, SCn; 19, 24, 29), der jeder Stufe zugeordnet ist und dazu geeignet ist, eine aus der Stufe ausgehende Menge an Flüssigkeit (H20) im Eingang aufzunehmen, um Wärme davon auszunehmen,
**dadurch gekennzeichnet, dass** sie
eine Leitung (C) umfasst, die mit jedem Wärmetauscher gekoppelt ist, damit eine Flüssigkeit (Aq) ihn durchströmt und an jedem Wärmetauscher Wärme von der darin umlaufenden Flüssigkeit ausnehmen kann,
wobei die Leitung (C) derart angeordnet ist, dass die Flüssigkeit (Aq) zuerst einige oder alle der Stufe zugeordneten Elemente, die mehr stromabwärts in Bezug auf das Rauchgas oder Gas ist, und danach die der Stufe zugeordneten Elemente durchsetzt, die unmittelbar mehr stromaufwärts ist, und so weiter.

2. Vorrichtung nach Anspruch 1, umfassend zumindest ein Absetzbecken (DC; 11), das einer Stufe (B; 5) zugeordnet ist und derart eingeführt wird, dass das aus der Stufe ausgehende Rauchgas aufnimmt und die in der aus der Stufe ausgehenden Flüssigkeit vorhandenen Partikel in Suspension im Becken hält.

3. Vorrichtung nach Anspruch 1 oder 2, wobei die Leitung alle Absetzbecken der vorhandenen Stufen durchsetzt.

4. Vorrichtung nach Anspruch 1 oder 2 oder 3, umfassend einen Flüssigkeitskreis, um die Menge an Flüssigkeit in Rezirkulation zur Ausgangsstufe zu setzen.

5. Vorrichtung nach einem der vorhergehenden Ansprüche, wobei den Durchsatz der Flüssigkeit in den Stufen einstellbar ist, damit die Summe der Gesamtdurchsätze der Stufen gleich einer einstellbaren Konstante (K) bleibt.

6. Vorrichtung nach einem der vorhergehenden Ansprüche, umfassend Innenwege für die Flüssigkeit in der Stufe, die so auszubilden sind, dass sich Flüssigkeitsschleier oder -Wände oder - Kaskaden (V, VL) quer zur Vorschubrichtung des Rauchgases oder des Gases innerhalb der Stufe bilden, damit das Rauchgas oder Gas gezwungen werden, sie zu durchströmen.

7. Vorrichtung nach Anspruch 6, wobei eine Stufe Folgendes umfasst: eine Außenhohlhülle (52, 76; 138, 142), die einen Eingang und einen Ausgang (134, 135, 146) für das Rauchgas oder Gas hat, eine Vielzahl von Wänden (112), deren Oberflächen derart angeordnet sind, dass sie einen Weg für das Rauchgas oder Gas innerhalb der Hülle ausbilden, eine Sprühdüse (118; 62) für die Flüssigkeit, die innerhalb der Hülse angeordnet ist, um die Flüssigkeit zu sprühen und das Rauchgas oder Gas zu waschen, um Wärme und Verunreinigungen davon auszunehmen, wobei die Vielzahl von Wänden und die Sprühdüse derart angeordnet sind, dass die Flüssigkeit von einer Wände zu der anderen geht, indem sie im Zwischenraum eine(n) quer zum Flüssigkeitsweg angeordnete(n) Flüssigkeitskaskade oder -Schleier oder -Wand ausbildet.

8. Vorrichtung nach Anspruch 7, wobei Sprühdüse dazu geeignet ist, Wasser unmittelbar gegen eine Wand zu sprühen, um darauf einen Film aus fließenden Flüssigkeit auszubilden.

9. Vorrichtung nach Anspruch 8, wobei die Wände derart angeordnet sind, dass sie einen gewundenen Weg des Rauchgase mit folgenden Richtungsänderungen von zumindest 90 Grad bestimmen.

10. Verfahren zur Energierückgewinnung aus Rauchgas oder Gas (F; FF; F2), umfassend:
Durchströmen von Rauchgas oder Gas innerhalb von zumindest zwei Stufen (A, B; 3, 15, 20) als Kaskade, so dass die Stufe stromabwärts das aus der Stufe stromaufwärts ausgehende Rauchgas oder Gas aufnimmt,
Einführen einer Flüssigkeit (H20) in jede Stufe, die auf das in der Stufe durchgehende Rauchgas oder Gas stoßen muss, um Wärme und/oder Verunreinigungen davon auszunehmen und die Flüssigkeit in Zirkulation zu dem zumindest einen Wärmetauscher (SC1, SC2, SCn) zu setzen, der jeder Stufe zugeordnet ist, um Wärme aus der Flüssigkeit aufzunehmen,
**dadurch gekennzeichnet,dass**
eine Flüssigkeit (Aq) in Zirkulation gesetzt wird, so dass sie jeden Wärmetauscher als Kaskade durchsetzt und Wärme aus der aus einer Stufe ankommenden Flüssigkeit ausnimmt,
wobei die Flüssigkeit (Aq) derart zirkuliert, dass sie zuvorderst den der Stufe stromabwärts zur Vorschubrichtung des Rauchgases oder Gases zugeordneten Wärmetauscher und darauf folgend die Wärmetauscher der Stufen stromaufwärts trifft.

11. Verfahren nach Anspruch 10, wobei die Flüssigkeit in einem Becken dekantiert wird, während sie aus/zu einer Stufe zirkuliert.

12. Verfahren nach Anspruch 11, wobei die Flüssigkeit derart zirkuliert, dass sie das Becken trifft und Wärme von der dort vorhandenen Flüssigkeit ausnimmt.

## Revendications

1. Dispositif (1 ; 50) pour la récupération d'énergie de fumées ou gaz (F ; FF ; F2), comprenant
au moins deux stades (A, B ; 3, 15, 20) en cascade, dans lesquels le stade en aval reçoit des fumées ou gaz en sortie de celui en amont,
chaque stade comprenant une entrée (A1, B1 ; 27, 26) et une sortie (U1, U2 ; 9, 18) pour un liquide (H20) qui doit se heurter avec les fumées ou gaz qui passent dans le stade afin de soustraire d'eux de la chaleur et/ou des impuretés ;
au moins un échangeur de chaleur (SC1, SC2, SCn ; 19, 24, 29) associé à chaque stade et pouvant recevoir en entrée une quantité de liquide (H20) en sortie du stade pour en soustraire de la chaleur,
**caractérisé en ce qu'**il comprend
un conduit (C) couplé à chaque échangeur de chaleur pour qu'un fluide (Aq) puisse le traverser et, au niveau de chaque échangeur, soustraire de la chaleur au liquide qui circule ici,
le conduit (C) étant disposé de manière que le fluide (Aq) traverse tout d'abord certains ou tous les éléments associés au stade qui est, par rapport au flux des fumées ou gaz, plus en aval, puis les éléments associés au stade directement plus en amont, et ainsi de suite.

2. Dispositif selon la revendication 1, comprenant au moins un bassin de décantation (DC ; 11) associé à un stade (B ; 5) et inséré de manière à recevoir le gaz en sortie du stade et retenir dans le bassin les particules en suspension présentes dans le liquide en sortie du stade.

3. Dispositif selon la revendication 1 ou 2, dans lequel le conduit traverse tous les bassins de décantation des stades présents.

4. Dispositif selon la revendication 1 ou 2 ou 3, comprenant un circuit de fluide pour remettre en recirculation ladite quantité de fluide vers le stade de départ.

5. Dispositif selon l'une des revendications précédentes, dans lequel le débit du liquide dans les stades est réglable de manière que la somme des débits globals des stades reste égale à une constante (K) qui peut être établie.

6. Dispositif selon l'une des revendications précédentes, comprenant des trajets intérieurs pour le liquide vers un stade à configurer de manière à former des voiles ou rideaux ou cascades de liquide (V, VL) transversalement à la direction d'avance des fumées ou gaz dans le stade, de manière que les fumées ou gaz sont contraints de les traverser.

7. Dispositif selon la revendication 6, dans lequel un stade comprend une coque externe creuse (52, 76 ; 138, 142) ayant une entrée et une sortie (134, 135, 146) pour les fumées ou gaz, une pluralité de cloisons (112) avec leurs surfaces disposées pour définir un trajet pour les fumées ou gaz dans la coque, un pulvérisateur de liquide (118 ; 62) disposé à l'intérieur de la coque pour pulvériser un liquide et laver les fumées ou gaz, de manière à en soustraire de la chaleur et des impuretés, la pluralité de cloisons et le pulvérisateur étant placés de manière que le liquide va d'un cloison à l'autre en formant dans l'espace intermédiaire une cascade ou une voile ou un rideau de liquide transversal(e) au trajet des fumées.

8. Dispositif selon la revendication 7, dans lequel le pulvérisateur est adapté pour pulvériser de l'eau directement contre un cloison de manière à former sur le même cloison un film de liquide en circulation.

9. Dispositif selon la revendication 8, dans lequel les cloisons sont disposés pour déterminer un trajet tortueux des fumées, avec des changements suivants de direction au moins de 90 degrés.

10. Méthode pour la récupération d'énergie de fumées ou gaz (F ; FF ; F2), comprenant :
faire écouler les fumées ou gaz dans au moins deux stades (A, B ; 3, 15, 20) en cascade de manière que le stade en aval reçoit des fumées ou gaz en sortie de celui en amont,
Introduire dans chaque stade un liquide (H20) qui doit se heurter avec les fumées ou gaz qui passent dans chaque stade afin de soustraire d'eux de la chaleur et/ou des impuretés et mettre en circulation le liquide vers au moins un échangeur de chaleur (SC1, SC2, SCn) associé à chaque stade pour absorber de la chaleur du liquide,
**caractérisé en ce que**
on fait circuler un fluide (Aq) de manière qu'il traverse en cascade chaque échangeur et en soustraie de la chaleur du liquide qui arrive d'un stade,
le liquide (Aq) circulant de manière à être le premier qui heurte l'échangeur associé au stade en aval par rapport à la direction d'avance des fumées ou gaz, et subséquemment les échangeurs des stades en amont.

11. Méthode selon la revendication 10, dans laquelle on fait décanter le liquide dans un bassin tandis qu'il circule de/vers un stade.

12. Méthode selon la revendication 11, dans laquelle le liquide circule de manière à heurter un dit bassin et soustraire de la chaleur du liquide présent ici.
